(19) Europäisches Patentamt
European Patent Office
Office européen des brevets

(11) EP 1 838 526 B1

(12) **EUROPEAN PATENT SPECIFICATION**

(45) Date of publication and mention of the grant of the patent:
**24.02.2010 Bulletin 2010/08**

(21) Application number: **06701310.2**

(22) Date of filing: **11.01.2006**

(51) Int Cl.:
***B32B 27/08*** *(2006.01)* ***B32B 3/10*** *(2006.01)*
***B65D 33/01*** *(2006.01)*

(86) International application number:
**PCT/GB2006/000070**

(87) International publication number:
**WO 2006/075141 (20.07.2006 Gazette 2006/29)**

(54) **SELF-VENTING COMPOSITE POLYMERIC FILM**

ATMUNGSAKTIVER VERBUNDPOLYMERFILM

FILM POLYMERE COMPOSITE AUTOVENTILE

(84) Designated Contracting States:
**DE FR GB IT**

(30) Priority: **17.01.2005 GB 0500907**

(43) Date of publication of application:
**03.10.2007 Bulletin 2007/40**

(73) Proprietor: **DuPont Teijin Films U.S. Limited Partnership**
**Chester, VA 23836 (US)**

(72) Inventors:
- **SANKEY, Stephen, William**
**Middlesbrough TS90 8JF (GB)**
- **EVANS, Kenneth**
**Middlesbrough TS90 8JF (GB)**
- **VOISIN, David**
**Middlesbrough TS90 8JF (GB)**

(74) Representative: **Cockerton, Bruce Roger et al**
**Carpmaels & Ransford**
**43-45 Bloomsbury Square**
**London**
**WC1A 2RA (GB)**

(56) References cited:
**WO-A-00/21854**
**WO-A-03/026892**
**WO-A-2005/007400**
**US-A1- 2004 033 382**
**US-A1- 2004 213 956**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 838 526 B1

Printed by Jouve, 75001 PARIS (FR)

## Description

This invention relates to a self-venting composite polymeric film suitable as packaging for ready-prepared ovenable meals, particularly microwaveable meals, including use as a lid for a container for the ovenable meal.

Plastic containers are commonplace in packaging applications, such as food packaging, and in particular for packaging convenience foods, for example ready-prepared ovenable meals which are warmed either in a microwave oven or in a conventional oven. Often the container comprises a polymeric material onto which has been deposited a thin metal layer, such as metallised (particularly flash-metallised) PET cartonboard. For example, the container may be produced from PET which has been metallised to an optical density in the range of about 0.01 to 4.0 and which is laminated to cartonboard. Such containers have been referred to as "susceptor" containers and are disclosed in, for instance, GB-A-2280342, EP-A-0563442, GB-A-2250408 and GB-A-2046060.

Ovenable containers for ready prepared meals require lids which can both seal the container, in order to prevent leakage and drying out of the packaged contents and to provide a protective seal against insects, bacteria and air-borne contaminants during storage, and which can also be easily peeled from the container on opening. Other important requirements of the lids are that they should not stick to the packaged contents and that they should be able to withstand the heat generated in the oven. Container lids normally comprise a film comprising a flexible substrate and a heat-sealable layer, and are often referred to as "lidding" films. Oriented polymeric film, particularly biaxially oriented polyester film, has previously been used as the flexible substrate for lidding films. The manufacture of sealed containers using lidding films involves the formation of a seal between the lidding film and the container. This seal is formed by placing the lid on top of the container and applying heat and pressure in order to soften or melt the sealable coating layer so that it adheres to the surface of the container and forms an effective seal between the lid and the container. WO-01/92000-A discloses an air-permeable composite film comprising a perforated substrate layer and a sealing layer in which the material of the sealing layer fills the gaps in the substrate layer, wherein in use the differential pressure between the two sides of the composite film causes reversible enlargement of the gaps, which act as valves, allowing air-permeability in a composite film which would otherwise be impermeable. GB-2355956-A discloses a composite film comprising a gas-permeable polyolefin barrier and a sealable layer, which may be perforated or in the form of a mesh or net, and which is stated as suitable for packaging fresh-cut fruit vegetables. Other optionally heat-sealable composite films comprising a perforated layer are disclosed in EP-0358461-A; EP-0178218-A; US-2002/0187694-A; JP-A-06/219465-A; JP-06/165636-A; JP-54/117582-A.

An important consideration with ready-prepared convenience meals is that water vapour is driven from the food during the cooking cycle. If the steam thereby produced is not properly vented, the build-up of pressure may cause conventional packaging, for instance the film lid, to burst and fracture, causing fragments of the packaging to contaminate the contents of the container. The film lid may also fail locally along the edge of the tray, leading to uneven cooking of the food inside the tray and potential hazard when handling the tray after the cooking cycle from steam escaping along the edges of the tray. Previous packaging for ovenable ready-prepared food containers generally required that the user pierce the packaging to prevent this. However, the need for piercing prior to warming the food in its container is often forgotten or not understood by the user. Previous self-venting films which address these problems include those disclosed in WO-02/26493-A; WO-03/026892-A; and WO-03/061957-A. It would be desirable to provide packaging which did not require the user to pierce it before cooking; which provides a barrier to insects, bacteria and air-borne contaminants; and which allows water vapour to freely pass out of the packaging during the cooking cycle.

It is therefore an object of this invention to provide self-venting packaging suitable for ready-prepared ovenable meals.

According to the present invention, there is provided the use of a heat-sealable, composite film comprising a polymeric substrate layer having a first and second surface and disposed on a surface of the substrate layer a barrier layer, wherein

(i) the substrate layer has one or more venting means therein;
(ii) the thickness of the barrier layer is from about 0.05 to about 30 $\mu$m;
(iii) the barrier layer comprises a polyester thermoplastic elastomer; and
(iv) Tensile Elongation at Break of the barrier layer measured according to ASTM D882 is at least about 250%,

as packaging for an ovenable meal, and particularly as a lid in said packaging wherein said packaging further comprising a receptacle.

In a further aspect, the present invention provides the use of said film as a self-venting film in the packaging of an ovenable meal, particularly wherein said packaging comprises the film as a lid and further comprises a receptacle.

In a further aspect, the present invention provides a method of packaging an ovenable meal, said method comprising providing a film as described herein as at least part of said packaging, and particularly as a lid in said packaging wherein said packaging further comprises a receptacle.

In a further aspect, the present invention provides a method of self-venting the packaging of an ovenable meal during the cooking cycle thereof, said method comprising providing a film as described herein as at least part of said packaging, and particularly as a lid in said packaging wherein said packaging further comprises a receptacle.

The substrate has a first and a second surface. The first surface is the surface which is outermost when the film is used as such packaging, and the second surface is the surface which is innermost and faces the goods to be packaged. For instance, where the film described herein is used as a lidding film and disposed on a receptacle for ovenable meals, the second surface is the surface which is innermost and faces the container.

In a first embodiment, the substrate layer is itself a heat-sealable layer. In this embodiment, the barrier layer is normally disposed on the first surface of the substrate.

In a second embodiment, the composite film comprises a discrete heat-sealable layer disposed on the second surface of the substrate. In this embodiment, the heat-sealable layer also contains venting means such that the locations of the venting means of the heat-sealable layer correspond to those of the substrate layer and, in practice, the venting means in the heat-sealable and substrate layers are produced at the same time. In this embodiment, the barrier layer is normally disposed on the first surface of the substrate.

The substrate is a self-supporting film or sheet by which is meant a film or sheet capable of independent existence in the absence of a supporting base. The substrate may be formed from any suitable film-forming material. Thermoplastic polymeric materials are preferred. Such materials include a homopolymer or copolymer of a 1-olefin, such as ethylene, propylene and but-1-ene, a polyamide, a polycarbonate, PVC, PVA, polyacrylates, celluloses and a polyester. Polyolefins and polyesters, particularly linear polyesters, are preferred. If the composite film does not comprise an additional heat-sealable layer, the substrate is itself heat-sealable. The substrate is preferably uniaxially or biaxially oriented, preferably biaxially oriented.

Thermoset resin polymeric materials suitable for use as the substrate include addition polymerisation resins, such as acrylics, vinyls, bis-maleimides and unsaturated polyesters; formaldehyde condensate resins, such as condensates with urea, melamine or phenols, cyanate resins, functionalised polyesters, polyamides or polyimides.

Suitable polyesters include those derived from one or more dicarboxylic acids, such as terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid), and from one or more glycols, particularly an aliphatic or cycloaliphatic glycol, such as ethylene glycol, 1,3-propanediol, 1,4-butanediol, neopentyl glycol and 1,4-cyclohexanedimethanol. An aliphatic glycol is preferred.

A preferred substrate polyester is selected from polyethylene terephthalate and polyethylene naphthalate. Polyethylene terephthalate (PET) or a copolyester thereof is particularly preferred.

A preferred polyolefin substrate comprises polyethylene or polypropylene, preferably polypropylene.

In the embodiment wherein the substrate is itself heat-sealable, hereinafter referred to as **Embodiment A**, the substrate comprises a heat-sealable polyolefin (preferably a polypropylene) or a heat-sealable polyester.

In the embodiment wherein the composite film comprises an additional heat-sealable layer, hereinafter referred to as **Embodiment B**, the substrate preferably comprises a polyester. In Embodiment B, the additional heat-sealable layer is any layer capable of forming a heat-seal bond to the surfaces of the container, for example a polymeric material such as a polyester, ethylene vinyl acetate (EVA) or a modified polyethylene. The polymer material of the heat-sealable layer should soften to a sufficient extent that its viscosity becomes low enough to allow adequate wetting for it to adhere to the surface to which it is being bonded. In one embodiment, the heat-sealing layer comprises a polyester, particularly a copolyester derived from one or more of the dicarboxylic acid(s) or their lower alkyl diesters with one or more of the glycol(s) referred to herein.

The thickness of an additional heat-sealable layer is generally between about 1 and 30% of the thickness of the substrate. Typically, an additional heat-sealable layer may have a thickness of up to about 25 $\mu$m, more preferably up to about 15 $\mu$m, more preferably up to about 10 $\mu$m, more preferably beteen about 0.5 and 6 $\mu$m, and more preferably between about 0.5 and 4 $\mu$m. In one embodiment, the additional heat-sealable layer has a thickness of at least 2 $\mu$m, and preferably between about 2 and 10 $\mu$m.

In one embodiment, hereinafter referred to as **Embodiment B1**, the additional heat-sealable layer comprises a copolyester derived from an aliphatic glycol and at least two dicarboxylic acids, particularly aromatic dicarboxylic acids, preferably terephthalic acid and isophthalic acid. A preferred copolyester is derived from ethylene glycol, terephthalic acid and isophthalic acid. The preferred molar ratios of the terephthalic acid component to the isophthalic acid component are in the range of from 50:50 to 90:10, preferably in the range from 65:35 to 85:15. In a preferred embodiment, this copolyester is a copolyester of ethylene glycol with about 82 mole % terephthalate and about 18 mole % isophthalate.

In an alternative embodiment, hereinafter referred to as **Embodiment B2**, the additional heat-sealable layer comprises a copolyester derived from an aliphatic diol and a cycloaliphatic diol with one or more, preferably one, dicarboxylic acid(s), preferably an aromatic dicarboxylic acid. Examples include copolyesters of terephthalic acid with an aliphatic diol and a cycloaliphatic diol, especially ethylene glycol and 1,4-cyclohexanedimethanol. The preferred molar

ratios of the cycloaliphatic diol to the aliphatic diol are in the range from 10:90 to 60:40, preferably in the range from 20: 80 to 40:60, and more preferably from 30:70 to 35:65. In a preferred embodiment this copolyester is a copolyester of terephthalic acid with about 33 mole % 1,4-cyclohexane dimethanol and about 67 mole % ethylene glycol. An example of such a polymer is PETG™6763 (Eastman) which comprises a copolyester of terephthalic acid, about 33% 1,4-cyclohexane dimethanol and about 67% ethylene glycol and which is always amorphous. In an alternative embodiment of the invention, the polymer of layer B may comprise butane diol in place of ethylene glycol.

In a further alternative embodiment, hereinafter referred to as **Embodiment B3**, the additional heat-sealable layer comprises an aromatic dicarboxylic acid and an aliphatic dicarboxylic acid. A preferred aromatic dicarboxylic acid is terephthalic acid. Preferred aliphatic dicarboxylic acids are selected from sebacic acid, adipic acid and azelaic acid. The concentration of the aromatic dicarboxylic acid present in the copolyester is preferably in the range from 45 to 80, more preferably 50 to 70, and particularly 55 to 65 mole % based on the dicarboxylic acid components of the copolyester. The concentration of the aliphatic dicarboxylic acid present in the copolyester is preferably in the range from 20 to 55, more preferably 30 to 50, and particularly 35 to 45 mole % based on the dicarboxylic acid components of the copolyester. Particularly preferred examples of such copolyesters are (i) copolyesters of azeleic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point ($T_g$) of -40°C and a melting point ($T_m$) of 117°C), and a copolyester of azeleic acid/terephthalic acid/ethylene glycol (preferably having the components in the relative molar ratios of 40-50/60-50/100, more preferably 45/55/100) having a $T_g$ of -15°C and a $T_m$ of 150°C. In embodiment B3, the thickness of the additional heat-sealable layer is preferably at least 2 μm, and typically about 2 to 10 μm.

In a further alternative embodiment, hereinafter referred to as **Embodiment B4**, the additional heat-sealable layer comprises an ethylene vinyl acetate (EVA). Suitable EVA polymers may be obtained from DuPont as Elvax™ resins. Typically, these resins have a vinyl acetate content in the range of 9% to 40%, and typically 15% to 30%. In this embodiment, the thickness of the additional heat-sealable layer is preferably at least 2 μm, and typically about 2 to 10 μm.

In a further alternative embodiment, hereinafter referred to as **Embodiment B5**, the additional heat-sealable layer comprises a copolyester derived from one or more poly(alkylene oxide) glycol(s), one or more low molecular weight diol(s), and one or more dicarboxylic acid(s), such that the copolyester comprises three or more (and preferably three) different monomeric units derived from said low molecular weight diol(s) and said dicarboxylic acid(s). Thus, the copolyester comprises one or more poly(alkylene oxide) glycol(s), a first low molecular weight diol, a second dicarboxylic acid, and a further comonomer selected from a second low molecular weight diol and a second dicarboxylic acid which imparts heat-sealability, and preferably this further comonomer is a dicarboxylic acid. Thus, in a preferred embodiment, the copolyester comprises said one or more poly(alkylene oxide)glycol(s), two or more (typically two or three, more typically two) different monomeric units derived from dicarboxylic acids (preferably aromatic), and one or more (typically one) monomeric units derived from low molecular weight diol(s). In an alternative embodiment, the copolyester may comprise said one or more poly(alkylene oxide)glycol(s), one or more (typically one) different monomeric units derived from dicarboxylic acids (typically aromatic), and two or more (typically two) monomeric units derived from low molecular weight diol(s). Suitable poly(alkylene oxide) glycols are preferably selected from $C_2$ to $C_{15}$, preferably $C_2$ to $C_{10}$, preferably $C_2$ to $C_6$ alkylene chains, and preferably selected from polyethylene glycol (PEG), polypropylene glycol (PPG) and poly (tetramethylene oxide) glycol (PTMO), preferably polyethylene glycol. Ethylene oxide-terminated poly(propylene oxide) segments may also be used. Mixtures of poly(alkylene oxide) glycols can be used, but in a preferred embodiment the copolyester comprises only one type of poly(alkylene oxide) glycol residue. The average molecular weight of the poly (alkylene oxide) glycol is preferably at least about 400 (and typically at least about 1000), and preferably no more than about 10000, preferably no more than 4500 and in one embodiment no more than about 2500. The amount of poly (alkylene oxide) glycol present in the copolyester is preferably no more than 50mol% of the glycol fraction of the copolyester, preferably no more than 45 mol%, and preferably in the range of 10 to 40 mol%, and in one embodiment in the range of 20 to 40 mol%. Suitable low molecular weight diols (i.e the diol itself having a molecular weight below about 250) are selected from those described hereinabove in respect of the substrate polyester, and preferably from aliphatic diols with 2-15 carbon atoms such as ethylene, propylene, tetramethylene glycol, and preferably from ethylene and propylene glycols, and particularly from ethylene glycol. Suitable dicarboxylic acids have a molecular weight of less than about 300 (which refers to the molecular weight of the acid and not to its equivalent ester or ester-forming derivative) and may be selected from aromatic acids such as terephthalic acid, isophthalic acid, phthalic acid and 2,5-, 2,6- or 2,7-naphthalene dicarboxylic acid, as well as sulphonated aromatic dicarboxylic acids in which a sulfonate group is attached to the aromatic nucleus. Preferably, the sulfonate group of the sulfomonomer is a sulfonic acid salt, preferably a sulfonic acid salt of a Group I or Group II metal, preferably lithium, sodium or potassium, more preferably sodium. Ammonium salts may also be used. The sulphonated aromatic dicarboxylic acid may be selected from any suitable aromatic dicarboxylic acid, e.g. terephthalic acid, isophthalic acid, phthalic acid, 2,5-, 2,6- or 2,7-naphthalenedicarboxylic acid. However,

preferably the aromatic dicarboxylic acid of the sulfomonomer is isophthalic acid. Preferred sulfomonomers are 5-sodium sulpho-isophthalic acid and 4-sodium sulpho-isophthalic acid. Typically, non-sulphonated aromatic dicarboxylic acids are used, such as terephthalic acid and isophthalic acid. Preparation of the copolyesters is readily achieved by conventional methods well-known in the art. In one embodiment, hereinafter referred to as **Embodiment B5(a)**, the dicarboxylic acid component comprises a first aromatic dicarboxylic acid (preferably terephthalic acid) and a second dicarboxylic acid (preferably aromatic, and preferably isophthalic acid) which imparts heat-sealability, and optionally a third dicarboxylic acid (preferably aromatic, and sulphonated, and preferably sodium sulpho-isophthalic acid). In embodiment B5(a), the first dicarboxylic acid is preferably present in an amount of 50 to 90 mol% (preferably 65 to 85 mol%, preferably 80 to 85 mol%) of the acid component, the second dicarboxylic acid is preferably present in an amount of 10 to 50 mol% (preferably 15 to 35 mol%, preferably 15 to 20 mol%) of the acid component, and the third dicarboxylic acid component is preferably present in an amount of 0 to 10 mol% (and if present, typically 1 to 6 mol%) of the acid component. Typically, the dicarboxylic acid component comprises only first and second dicarboxylic acids. Thus, in a preferred embodiment, the copolyester is derived from poly(alkylene oxide)glycol (preferably PEG), ethylene glycol, terephthalic acid, isophthalic acid, and optionally sodium sulpho-isophthalic acid, and preferably from poly(alkylene oxide)glycol (preferably PEG), ethylene glycol, terephthalic acid and isophthalic acid. In an alternative embodiment, hereinafter referred to as **Embodiment B5(b)**, the second layer comprises a copolyester derived from an aromatic dicarboxylic acid, a first low molecular weight diol (preferably an aliphatic diol, preferably ethylene glycol or butane diol, more preferably ethylene glycol), a poly(alkylene oxide) glycol, and a second low molecular weight diol (preferably a cycloaliphatic diol, for instance 1,4-cyclohexanedimethanol). Examples include copolyesters of terephthalic acid with a poly(alkylene oxide) glycol, an aliphatic diol and a cycloaliphatic diol, especially ethylene glycol and 1,4-cyclohexanedimethanol. The first low molecular weight diol is preferably present in amounts of 40 to 90 mol% of the total glycol fraction, preferably in the range from 50 to 80 mol%. The second low molecular weight diol is preferably present in amounts of 10 to 40 mol% of the total glycol fraction. The poly(alkylene oxide) glycol is preferably present in amounts of 10 to 40 mol% of the total glycol fraction.

Preferably, the composite film exhibits a heat-seal strength (at ambient temperatures) to itself of at least 400 g/25mm, preferably from about 400 g/25mm to about 1000 g/25mm, and more preferably from about 500 to about 850 g/25mm.

The composite film typically exhibits a heat-seal strength (at ambient temperatures) to a standard APET/CPET tray in the range of 400 to 1800 g/25mm, and preferably at least 500, preferably at least 600, preferably at least 700 and more preferably at least 800g/25mm. Preferably, the heat-seal strength of the coated film to APET/CPET trays is in the range of 800-1500g/25mm, preferably 800-1200 g/25mm. The heat-seal strength should be sufficiently strong that the heat-seal bond between the film and tray is not broken during the cooking cycle when the film is used as a lid in the packaging of an ovenable meal, whilst allowing the consumer to peel the lid from the tray upon completion of the cooking cycle.

Formation of the substrate may be effected by conventional techniques well-known in the art. Conveniently, formation of the substrate is effected by extrusion, in accordance with the procedure described below. In general terms the process comprises the steps of extruding a layer of molten polymer; quenching the extrudate and orienting the quenched extrudate in at least one direction.

The substrate may be uniaxially oriented, but is preferably biaxially oriented by drawing in two mutually perpendicular directions in the plane of the film to achieve a satisfactory combination of mechanical and physical properties. Orientation may be effected by any process known in the art for producing an oriented film, for example a tubular or flat film process.

In the preferred flat film process, the substrate-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is effected to an extent determined by the nature of the polyester, for example polyethylene terephthalate is usually stretched so that the dimension of the oriented film is from 2 to 5, more preferably 2.5 to 4.5 times its original dimension in the or each direction of stretching. Typically, stretching is effected at temperatures in the range of 70 to 125°C. Greater draw ratios (for example, up to about 8 times) may be used if orientation in only one direction is required. It is not necessary to stretch equally in the machine and transverse directions although this is preferred if balanced properties are desired.

A stretched film may be, and preferably is, dimensionally stabilised by heat-setting under dimensional restraint at a temperature above the glass transition temperature of the polyester but below the melting temperature thereof, to induce crystallisation of the polyester. In applications where film shrinkage is not of significant concern, the film may be heat set at relatively low temperatures or not at all. On the other hand, as the temperature at which the film is heat set

is increased, the tear resistance of the film may change. Thus, the actual heat set temperature and time will vary depending on the composition of the film but should not be selected so as to substantially degrade the tear resistant properties of the film. Within these constraints, a heat set temperature of about 135° to 250°C is generally desirable, as described in GB-A-838708.

Formation of an additional heat-sealable layer may be effected by conventional techniques.
The method of formation of the heat-sealable layer and application thereof to the substrate will depend on the identity of the heat-sealable layer. Conventional techniques include casting the heat-sealable layer onto a preformed substrate layer. Conveniently, formation of an additional heat-sealable layer and the substrate is effected by coextrusion, which would be suitable for Embodiments B1, B2 and B5 above. Other methods of forming the heat-sealable layer include coating the heat-sealable polymer onto the substrate, and this technique would be suitable for Embodiments B3 and B4 above. Coating may be effected using any suitable coating technique, including gravure roll coating, reverse roll coating, dip coating, bead coating, extrusion-coating, melt-coating or electrostatic spray coating. Coating may be conducted "off-line", i.e. after any stretching and subsequent heat-setting employed during manufacture of the substrate, or "in-line", i.e. wherein the coating step takes place before, during or between any stretching operation(s) employed. Preferably, coating is performed in-line, and preferably between the forward and sideways stretches of a biaxial stretching operation ("inter-draw" coating). Examples of the coating of heat-sealable layers include: GB-2024715 and GB-1077813 which disclose the inter-draw extrusion-coating of polyolefin onto substrates of polyolefin and polyester respectively; US-4333968 which discloses the inter-draw extrusion-coating of an ethylene-vinyl acetate copolymer onto a polypropylene substrate; and WO-02/59186 which discloses the coating of copolyester, and the disclosures of these documents are incorporated herein by reference.

Prior to application of an additional heat-sealable layer onto the substrate, the exposed surface of the substrate may, if desired, be-subjected to a chemical or physical surface-modifying treatment to improve the bond between that surface and the subsequently applied layer. For example, the exposed surface of the substrate may be subjected to a high voltage electrical stress accompanied by corona discharge. Alternatively, the substrate may be pretreated with an agent known in the art to have a solvent or swelling action on the substrate, such as a halogenated phenol dissolved in a common organic solvent e.g. a solution of p-chloro-m-cresol, 2,4-dichlorophenol, 2,4,5- or 2,4,6-trichlorophenol or 4-chlororesorcinol in acetone or methanol.

The substrate is suitably of a thickness between about 5 and 350p,m, preferably from 9 to about 150μm and particularly from about 12 to about 40μm.

The venting means in the substrate layer take the form of one or more incisions or perforations. The incisions or perforations in the substrate layer extend through the thickness of the film, i.e. if the film defines a plane in the x and y dimensions, then the incisions or perforations extend from the first surface of the film through to the second surface of the film substantially along the z-axis. The dimensions and number of the incisions or perforations per unit area may be adjusted depending on the kind of food to be packaged.

Generally, however, the length of the incisions may range from about 1 to about 50 mm. Preferably, there are from about 1 to about 100 incisions per 200 $cm^2$, more preferably from about 1 to about 50 incisions per 200 $cm^2$.

A single straight-line incision is capable of providing self-venting in use. In an alternative embodiment, a plurality of incisions can be disposed together, referred to herein as a "set" of incisions, such that the set of incisions creates one or more flaps in the film, which are capable of movement in response to the pressure build-up within the sealed container during the cooking cycle.

Incision of the substrate and, if present, the additional heat-sealable layer may be effected using any suitable cutting method, including blades and lasers.

Where the self-venting means comprises perforations, the average diameter is preferably from about 0.05 to about 1.5 mm, preferably from about 0.05 to about 1.0 mm, more preferably from abut 0.05 to about 0.7. In one embodiment (Embodiment I; laser perforation), the perforations are in the range of 0.05 to 0.3 mm, and typically in the range of 0.05 to 0.1 mm. In a further embodiment (Embodiment II; hot needle or gas flame perforation), the perforations are in the range of 0.1 to 1.5 mm, preferably in the range of about 0.1 to 1.0 mm. Preferably (for Embodiment I), there are from about 10 to 100,000 perforations per 200 $cm^2$ (i.e. over an area measuring 20cm x 10cm), and more preferably from about 100 to about 10,000 perforations per 200 $cm^2$. Preferably (for Embodiment II), there are from about 1 to about 100,000 perforations per 200 $cm^2$, more preferably from about 10 to about 10,000 perforations per 200 $cm^2$.

A perforated substrate preferably has a degree of perforation of from about 0.001 to about 50%, preferably from about 0.01 to about 10%. In one embodiment, the degree of perforation is from about 0.01 to about 50%, typically from about 1 to 50%, more typically from about 1 to 30%, and more typically from about 1 to 10%. The term "degree of perforation" as used herein refers to the hole fraction of the total surface area expressed as a percentage, i.e. it is the total area of the perforations as a percentage of the total film surface area.

Perforations in the substrate and, if present, the additional heat-sealable layer may be effected using any suitable means. A laser beam (for example a $CO_2$ laser) is suitable for perforations in the range of 0.05 and 0.3 mm. Mechanical perforation of the substrate and, if present, the additional heat-sealable layer may be effected by a hot needle

technique (for example using an Intermittent Hot Needle Perforator PX9 series; BPM Engineering Services Ltd, Rochdale, UK), and this technique is generally suitable for perforations having a hole diameter in the range of 0.1 to 1.5 mm, and typically 0.1 to 0.7 mm. Mechanical perforation of the substrate and, if present, the additional heat-sealable layer may also be effected by a gas flame techniques (for example using a Sherman gas flame film perforator), and this technique is generally suitable for perforations having hole size from 0.4 mm upwards.

Preferably all incisions or sets of incisions or perforations in the substrate have the same or substantially the same dimensions. The incisions or perforations are preferably present throughout the entire substrate. In an alternative embodiment, for instance where the film is used as a lidding film on a receptacle, there may be different compartments in the receptacle, and so the incisions or perforations may be present in only certain parts of the substrate, or in different dimensions or densities at different parts of the substrate.

The incisions (or sets of incisions) or perforations are preferably disposed in a regular formation, and typically in one or more lines across the substrate. Any suitable pattern may be adopted. For instance, perforations may be arranged in a cubic close-packed arrangement or a hexagonal close-packed arrangement.

In a preferred embodiment, the venting means comprises one or more incisions. In an alternative embodiment, the venting means comprises perforations, and particularly
wherein the thickness of the barrier layer is greater than 12 $\mu$m. In one embodiment, the thickness of the barrier layer over a perforated substrate is 12.1 $\mu$m or greater, preferably 12.5 $\mu$m or greater and preferably 13 $\mu$m or greater.

In the use of the film described herein as a lidding film, the function of the barrier layer is to provide a physical barrier to entry of external contaminants into the container, such as insects, bacteria and air-borne contaminants, which would spoil the food substance contained therein during transport and storage. The barrier layer is also adapted to allow egress of water vapour generated during the cooking cycle of the food substance, i.e. to allow the lidded container to be self-venting.

As described above, the barrier layer is disposed on the first surface of the substrate, and forms the outermost layer of the packaging when disposed on a receptacle for ovenable meals. Preferably, the barrier layer extends over the whole surface of the substrate. In one embodiment, however, the barrier layer does not extend across the whole surface of the substrate, for instance in cases where the substrate comprise incisions or perforations only in one or more discrete regions. In that embodiment, the barrier layer need only be applied onto the substrate in those discrete regions. Thus, the barrier layer may be coated as one or more strips across the width or length of the film in regions which cover the line(s) of perforations.

The barrier layer forms a discrete layer on at least part of the surface of the substrate and is disposed over the venting means, i.e. the barrier layer does not substantially extend into or fill the venting means. As used herein, the term "substantially extend into or fill the venting means" means that the material of the barrier layer occupies no more than 50%, preferably no more than 40%, preferably no more than 30%, preferably no more than 20%, preferably no more than 10%, preferably no more than 5%, and preferably 0% of the volume of a venting means, the volume of a venting means being defined as the volume of a void formed in the substrate layer by a venting means.

Self-venting is achieved by rupture of the thin barrier layer as a result of the pressure build-up generated by the water vapour formed during the cooking cycle. The incisions or perforations in the substrate layer are areas of structural weakness in the film which will yield to the build-up of pressure within a sealed container. The thickness of the barrier layer is such that the force generated by the pressure build-up within the container during the cooking cycle becomes greater than the strength of the barrier layer. Where the substrate comprises incisions, the pressure builds up to a point where the barrier layer is ruptured along the incision(s) in the substrate layer, allowing egress of water vapour. Where the substrate comprises perforations, a similar mechanism pertains; the force generated by the pressure build-up causes rupture of the barrier layer in the regions where it is not supported by substrate layer, i.e. in the regions of the perforations. Water vapour generated during the cooking cycle may then permeate through the film via the incisions or perforations in the substrate layer, thereby allowing self-venting of the container.

Thus, the material of the barrier layer over the one or more venting means is irreversibly ruptured in use such that the barrier properties thereof (for instance to bacteria, air-borne contaminants and insects) are destroyed by the pressure differential between the two sides of the composite film, for instance as a result of the pressure build-up generated by water vapour formed during the cooking cycle.

The value of the Tensile Elongation At Break according to ASTM D882 of the barrier layer is preferably at least 300%, and typically no more than 1000%. Preferably, the Tensile Elongation At Break is in the range of 250% to 1000%, more preferably in the range of 250% to 800%, more preferably in the range of 300 to 700%, and in one embodiment in the range of 350 to 600%.

The barrier layer is preferably insoluble or substantially insoluble in water. Solubility is measured as the fraction of the barrier layer dissolved when the film is immersed in deionised water at 80°C for 2 minutes. Thus, in the case of a completely water insoluble barrier layer, the mass fraction of layer dissolved is 0. It is preferred that the mass fraction of layer dissolved is no more than 0.2, preferably no more than 0.1, preferably no more than 0.05, preferably no more than 0.01, and preferably 0.

Clearly, the barrier layer should be non-heat-sealable at the temperatures at which the opposite, heat-sealable surface of the composite film is heat-sealed when putting to use the film of the present invention, in order that the composite film does not stick to the sealing jaws of the sealing machine. Thus, in one embodiment, the surface of the barrier layer should be non-heat-sealable at temperatures below about 170°C, and more preferably below about 180°C, and for instance should not stick to the jaws of a tray sealer (such as the Microseal PA 201 tray sealer referred to herein) used under the conditions described herein.

The polymeric material of the barrier layer is elastomeric, by which is meant that it has elastic properties exhibited by natural rubber and resumes its original shape when a deforming force is removed. The elastomeric materials should have an elongation at break of at least 250%. The polyester thermoplastic elastomers used in the present invention are well-known in the art (see, for example Z. Roslaniec and D. Pietkiewicz "Synthesis and Characteristics of Polyester-Based Thermoplastic Elastomers: Chemical Aspects" in Handbook of Thermoplastic Polyesters, Edited by Stoyko Fakirov, Vol. I, Wiley-VCH, ISBN 3-527-30113-5; Chapter 13; pp 581-658). The elastomers may be described as block copolymeric phase-separated systems in which one phase is relatively hard and solid and the other phase is liquid and rubbery at room temperature. Strength is provided by the hard phase, in the absence of which the rubbery elastomeric phase would flow under stress. The properties depend on the nature and amount of hard phase present. The glass transition temperatures ($T_{g1}$, and $T_{g2}$) and the crystalline melting point (Tm) of the soft and hard phases may be used to characterise the copolymer and determine the temperature range of their application. Elastomers are processed at high temperatures causing the hard phase to melt and -flow. On cooling, the hard phases solidify and behave as physical crosslinks between the elastomeric segments. The block (segmented) copolymers used in the present invention comprise alternating random-length sequences or segments joined by ester linkages. The rigid block is a polyester segment. The flexible block preferably comprises polyether segments. Thus, the present invention preferably utilises poly(ether ester) copolymers in the barrier layer. A comprehensive description of poly(ether ester) copolymers and the production thereof can be found for instance in the Encyclopedia of Polymer Science and Technology, Vol. 12, page 76-177 (1985).

The poly(ether ester) copolymers comprise alternating, random-length elastomeric segments (typically poly (alkylene oxide) units) joined by ester links to hard polyester segments (typically butylene terephthalate (PBT) or ethylene terephthalate (PET) polyester segments). Commercially available poly(ether ester) copolymers are available under the trade names Arnitel® (DSM; Netherlands) and Hytrel® (DuPont; USA), amongst others. The poly(ether ester) copolymers have the general formula I:

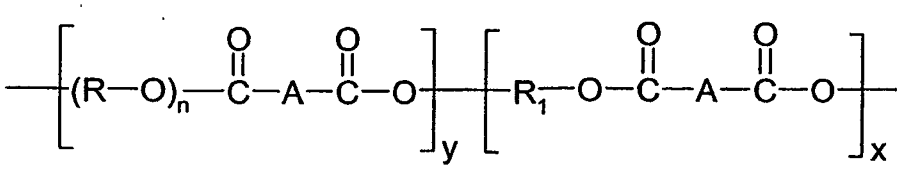

polyether flexible segment    polyester rigid segment

(I)

wherein

R and $R_1$ are (independently) selected from aliphatic chains (typically $C_2$ to $C_{15}$, preferably $C_2$ to $C_{10}$, preferably $C_2$ to $C_6$, and preferably $C_2$ to $C_4$, particularly alkylene chains preferably selected from ethylene, n-propylene and n-butylene (tetramethylene);
A is an aromatic ring (preferably phenyl or naphthyl, and more preferably phenyl) derived from one or more aromatic dicarboxylic acid(s) (preferably terephthalic acid (TA), isophthalic acid (IPA) or 2,6-naphthalene dicarboxylic acid, and more preferably TA);
x is typically in the range of 3-40;
y is typically in the range of 1-3; and
n is typically in the range of 14-35, preferably 14-28.

The rigid polyester segments typically comprise butylene or ethylene units ($R_1$) in commercial poly(ether ester) copolymers, typically as butylene terephthalate or ethylene terephthalate. The poly(ether ester) copolymers may comprise one or more aromatic components (A) derived from one or more aromatic dicarboxylic acids. A plurality of aromatic components is used in order to influence the degree of crystallisation of the hard phase and the mechanical properties

of the copolymer, and typically one of the acids is present in a relatively minor amount. For instance, isophthalic acid units have been used in combination with a predominantly terephthalate-based copoly(ether ester). The rigid segments may also comprise a mixture of aliphatic units derived from different diols. For instance, poly(ether ester) copolymers derived from a mixture of predominantly 1,4-butane diol and a relatively minor amount of 1,4-butyne diol have been shown to have valuable and advantageous properties. Branched diols have also been used. In one embodiment, however, the aliphatic ($R_1$) chain in the polyester rigid segment contains only saturated C-C bonds and/or non-branched chains.

The elastomeric segment typically comprises poly(tetramethylene oxide) (PTMO), polyethylene oxide (PEO) or poly(propylene oxide) (PPO), and usually PTMO or PEO. Ethylene oxide-terminated poly(propylene oxide) segments may also be used. Mixtures of poly(alkylene oxide)s may also be used, and such mixtures may be useful in maintaining the amorphous polyether phase structure. The molecular weight of the poly(alkylene oxide) is preferably at least about 400, and preferably at least about 1000. Preferably the molecular weight is less than about 2500. The molecular weight of the flexible elastomeric segment is preferably in the range of 500 to 6500, preferably 500 to about 6000, preferably 500 to about 4000, and in one embodiment at least 1000. In one embodiment, the molecular weight of the flexible elastomeric segment is less than about 3500, and in a further embodiment less than about 2500.

The synthesis of poly(ether ester) copolymers is well-established, and typically comprises a stepwise condensation-polymerisation in the molten state in two or three stages. Thus, the synthetic pathway is (i) trans-esterification of a dimethyl ester of the dicarboxylic acid (e.g. dimethyl terephthalate (DMT)) or condensation of the dicarboxylic acid (e.g. TA) with the hydroxyl groups of both the polyether glycol (e.g. PTMO) and low molecular weight diol (e.g. 1,4-butane diol); (ii) low-pressure melt polycondensation at high temperature (250-350°C); and (iii) post-polycondensation in the solid state (when a polymer of high molecular weight is desired), as is conventional in the art.

In one embodiment, the copoly(ether ester)s may be selected from those described in US-4,725,481, the disclosure of which is incorporated wherein by reference. In a preferred embodiment, the poly(ether ester) copolymers have a multiplicity of recurring long-chain ester units and short-chain ester units joined head-to-tail through ester linkages, said long-chain ester units being represented by the formula:

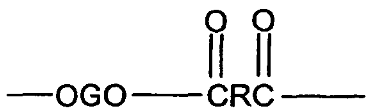

and said short-chain ester units being represented by the formula:

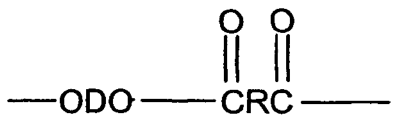

wherein

- G is a divalent radical remaining after the removal of terminal hydroxyl groups from a poly(alkylene oxide)glycol having an average molecular weight of at least about 400 (and preferably at least about 1000) and preferably less than about 2500, wherein the amount of alkylene oxide groups incorporated in the poly(ether ester) by the poly (alkylene oxide)glycol is from about 20 to about 68 weight percent, preferably from about 25 to about 68 weight percent, based upon the total weight of the poly(ether ester);
- R is a divalent radical remaining after removal of carboxyl groups from a dicarboxylic acid having a molecular weight less than about 300;
- D is a divalent radical remaining after removal of hydroxyl groups from a diol having molecular weight less than about 250;

wherein said poly(ether ester) contains from about 25 to about 80 weight percent short-chain ester units.

A plasticiser may be used when forming films from such materials, as is known in the art. Surfactants are normally employed when coating such a polymer onto the substrate layer to ensure a uniform layer.

The thickness of the barrier layer is from about 0.05 to about 30 μm, preferably no more than about 20 μm, preferably no more than about 15 μm, preferably no more than about 12 μm, and in one embodiment no more than about 8 μm. Typically, the thickness is 0.5 μm or greater, preferably 1 μm or greater, preferably 3 μm or greater, preferably 5 μm or greater. In one embodiment the thickness of the barrier layer is from 1 to 30 μm, preferably 3 to 20

μm, preferably 5 to 15 μm. In one embodiment, the thickness of the barrier layer over a perforated substrate is greater than 12 μm, preferably 12.1 μm or greater, preferably 12.5 μm or greater and preferably 13 μm or greater.

The composite film comprising the substrate and barrier layers may be formed by any suitable technique, and typically by coating the barrier layer onto the substrate (or onto the substrate and heat-sealable layer composite). The method of manufacture will depend on the identity of the barrier and substrate layers and/or on the structure of the substrate layers. The coating step may be performed according to conventional techniques well-known in the art. The coating step may, for example, be conducted using gravure coating (direct or indirect), slot-die coating, extrusion coating or melt coating techniques, and particularly by extrusion coating. The viscosity of the coating liquid at the point of application to the substrate must not be too high otherwise the polymer will not flow properly, resulting in difficulties in coating and uneven coat thicknesses, but should not be too low that the coating liquid passes through the incisions or perforations in the substrate layer. Preferably, the viscosity of the coating liquid is at least 0.05 Pa.s.

Slot-die coating and gravure coating are well-known in the art, and are particularly applicable when the viscosity of the coating liquid is from about 0.05 to about 10 Pa.s, with gravure coating being more suitable at the lower end of this range, and slot-die coating being more suitable at the higher end of this range.

Extrusion-coating is described by K.A. Mainstone in Modern Plastics Encyclopedia, 1983-84, Vol. 60, No. 10A, Edition 1, pp195-198 (McGraw-Hill, NY) and also by Franz Durst and Hans-Günte Wagner in Liquid Film Coating (Chapman and Hall; 1997; Eds S.F. Kistler and P.M. Schweizer; Chapter 11a). The extrusion-coating process is generally used for polymers of medium or high viscosity (at least 50 Pa.s and up to about 5000 Pa.s) and generally employs an air-gap (typically about 15cm) between the die and the substrate. The coated substrate is passed between a heat-removing chill roller and a pressure-loaded resiliently-covered nip-roll. Typically, an extrusion-coating process is performed at a temperature of in the range 200-300°C and often higher.

Melt-coating, also known as hot melt-coating or slot-coating, is described by Durst and Wagner (ibid). The coating is generally conducted at a temperature of about 260°C or below (typically 200 to 260°C, particularly 220 to 250°C, and more particularly 230 to 250°C). Melt-coating equipment typically comprises a melter, coupled to a die via an insulated flexible hose. The melter consists of a hopper having heating elements at its base, which heat the polymer/adhesive to a molten state. The hopper is fed continuously by conventional means so that the melter is always "topped up", thereby minimising air ingress to the molten polymer to reduce oxidation of the molten polymer. The molten polymer is then pumped through the hose to a traditional "coathanger" die. In the traditional melt-coating process, the substrate web is pressed up against the die by a roller such that there is no air gap between the die and substrate. The roller is generally a rubber-backing roller which provides sufficient back-pressure to the die to provide an even coating layer. Preferably the viscosity of the coating layer polymer at the processing temperature is no more than about 50 Pa.s and preferably at least about 20 Pa.s.

Where the substrate comprises perforations of greater than 0.1mm, the barrier layer is more suitably applied by extrusion coating.

Prior to coating, the exposed surface of the substrate and/or barrier layers of the composite film may, if desired, be subjected to a chemical or physical surface-modifying treatment as described hereinabove. In particular, a surfactant is preferred when coating the barrier layer onto the substrate in order to decrease the surface tension of the substrate layer and allow the wetting of the surface by the coating solution, and thereby obtain a uniform layer.

In one embodiment, an adhesion-promoting layer is applied to the first surface of the substrate in order to improve the delamination resistance between the substrate and the barrier layer. In this embodiment, the venting means are also present in the adhesion-promoting layer. The venting means are incorporated subsequently to the application of the adhesion-promoting layer to the first surface of the substrate and at the same time as the incorporation of the venting means in the substrate. In this embodiment, the substrate may itself be a heat-sealable layer (Embodiment A above) or may comprise on its second surface an additional heat-sealable layer (Embodiment B above). An adhesion-promoting layer may be applied to the substrate according to conventional techniques in the art. Thus, an adhesion-promoting layer may be applied as a coating either off-line or in-line during manufacture of the substrate. Alternatively, an adhesion-promoting layer may be applied as a coextruded layer during manufacture of the substrate. Suitable adhesion-promoting coatings include PVdC (typically applied by in-line or off-line coating) and copolyesters such as the ones disclosed herein (particularly the IPA-containing PET copolyesters referred to herein, which would preferably be applied by coextrusion).

According to a further aspect of the present invention, there is provided a process for producing a heat-sealable composite film comprising

(a) providing a polymeric substrate layer having a first and second surface and optionally a discrete heat-sealable layer disposed on the second surface of the substrate;
(b) providing one or more venting means in said substrate and if present said discrete heat-sealable layer; and
(c) providing a barrier layer comprising a polyester thermoplastic elastomer on a surface of the substrate,

wherein the thickness of the barrier layer is from about 0.05 to about 30 μm, and wherein said barrier layer has a Tensile Elongation At Break according to ASTM D882 of at least 250%

One or more of the layers of the polymeric film may conveniently contain any of the additives conventionally employed in the manufacture of polymeric films. Thus, agents such as cross-linking agents, dyes, pigments, voiding agents, lubricants, anti-oxidants, radical scavengers, UV absorbers, thermal stabilisers, anti-blocking agents, surface active agents, slip aids, optical brighteners, gloss improvers, prodegradents, viscosity modifiers and dispersion stabilisers may be incorporated as appropriate. In particular the composite film may comprise a particulate filler which may, for example, be a particulate inorganic filler or an incompatible resin filler or a mixture of two or more such fillers. Such fillers are well-known in the art.

Particulate inorganic fillers include conventional inorganic fillers, and particularly metal or metalloid oxides, such as alumina, silica (especially precipitated or diatomaceous silica and silica gels) and titania, calcined china clay and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the polymer layer. Preferred particulate inorganic fillers include titanium dioxide and silica.

The inorganic filler should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 μm, more preferably 0.05 to 1.5 μm, and particularly 0.15 to 1.2 μm. Preferably at least 90%, more preferably at least 95% by volume of the inorganic filler particles are within the range of the volume distributed median particle diameter ± 0.8 μm, and particularly ± 0.5 μm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

In the preferred embodiment, the film described herein is optically clear, preferably having a % of scattered visible light (haze) of <10%, preferably <6%, more preferably <3.5 % and particularly <2%, measured according to the standard ASTM D 1003. Preferably, the total light transmission (TLT) in the range of 400-800 nm is at least 75%, preferably at least 80%, and more preferably at least 85%, measured according to the standard ASTM D 1003. In this embodiment, filler is typically present in only small amounts, generally not exceeding 0.5% and preferably less than 0.2% by weight of the polymer of a given layer.

In use, the polymeric film described herein provides packaging for convenience or ready prepared foods, for example ovenable meals which are warmed either in a microwave or a conventional oven. The film allows the steam produced during the cooking cycle to be vented from the container. The self-venting films are also advantageous in that they promote uniform heating over the whole volume of the foodstuff, which can be a problem with existing lids for these types of applications. The receptacle may be a tray such as a thermoformed tray or bowl, and may for instance be formed of polyester, such as polyethylene terephthalate, or of polypropylene, polystyrene, or may be PVDC-coated. Typically, however, the receptacle for an ovenable meal is an APET/CPET tray (a composite material having an amorphous polyethylene terephthalate layer on top of a crystalline polyethylene terephthalate layer). Other suitable types of receptacle include a foil tray (particularly an aluminium foil tray), a metallised tray and a tray formed from PET-coated cartonboard or paperboard. Of particular utility are trays formed from metallised (particularly flash-metallised) PET cartonboard. For example, the tray may be produced from PET which has been metallised to an optical density in the range of about 0.01 to 4.0 and which is laminated to cartonboard. In one embodiment, the tray is a susceptor tray made from materials such as those disclosed in GB-A-2280342, EP-A-0563442 or GB-A-2250408, or is a susceptor tray produced in accordance with the disclosures of these documents, which are incorporated herein by reference.

In an alternative embodiment, the film is heat-sealed to itself to form substantially all of the packaging in an ovenable ready-prepared meal. In this embodiment, the seal is provided by heat-sealing a first portion of the film to a second portion of the film. Such seals are effected by conventional techniques and include "fin seals" and "overlap seals", preferably fin seals. Once the food product is placed within the film, the two portions of the film which are to be bonded together are brought together with the heat sealable surface of one film portion being in contact with the heat sealable surface of the other film portion, and the heat-seal bond formed by the application of temperature and optionally pressure using conventional equipment. The heat-seal bond may be formed at temperatures in the range of about 110

to about 150°C.

The invention further provides a packaged food product, particularly an ovenable meal, wherein the packaging comprises a film as defined herein.

The invention further provides a sealed container comprising a receptacle containing a food product, particularly an ovenable meal, and a lid formed from a polymeric film as defined herein. The sealed container is produced by techniques well-known to those skilled in the art. Once the food to be packaged has been introduced into the receptacle, the heat-sealable film lid is affixed using temperature and/or pressure using conventional techniques and equipment.

The invention further provides a packaged, sealed food product wherein the packaging which effects and forms the seal around the food product is a composite film as defined herein which is heat-sealed to itself.

The invention further provides a heat-sealable, composite film comprising a polymeric substrate layer having a first and second surface and disposed on a surface of the substrate layer a barrier layer, wherein

(i) the substrate layer has one or more venting means therein;
(ii) the thickness of the barrier layer is from about 0.05 to about 30 μm;
(iii) the barrier layer comprises a polyester thermoplastic elastomer; and
(iv) the tensile Elongation At Break of the barrier layer measured according to ASTM D882 is at least 250%,

and in one embodiment with the proviso that where the venting means are perforations, the thickness of the barrier layer is greater than 12 μm.

The invention further provides a heat-sealable, composite film comprising a polymeric substrate layer having a first and second surface and disposed on a surface of the substrate layer a barrier layer, wherein

(i) the substrate layer has one or more venting means therein, wherein said venting means comprise one or more incisions;
(ii) the thickness of the barrier layer is from about 0.05 to about 30 μm;
(iii) the barrier layer comprises a polyester thermoplastic elastomer; and
(iv) the tensile Elongation At Break of the barrier layer measured according to ASTM D882 is at least 250%.

The invention further provides a heat-sealable, composite film comprising a polymeric substrate layer having a first and second surface and disposed on a surface of the substrate layer a barrier layer, wherein

(i) the substrate layer has one or more venting means therein;
(ii) the thickness of the barrier layer is greater than 12 μm and up to about 30 μm;
(iii) the barrier layer comprises a polyester thermoplastic elastomer; and
(iv) the tensile Elongation At Break of the barrier layer measured according to ASTM D882 is at least 250%,

and wherein said venting means are perforations.

The following test methods may be used to characterise the polymeric film:

(i) Clarity of the film may be evaluated by measuring total light transmission (TLT) and haze (% of scattered transmitted visible light) through the total thickness of the film using a Gardner XL 211 hazemeter in accordance with ASTM D-1003-61.

(ii) Heat-seal strength of the heat-sealable layer to itself is measured by positioning together and heating the heat-sealable layers of two samples of polyester film at 140°C for one second under a pressure of 275 kPa (40 psi). The sealed film is cooled to room temperature, and the sealed composite cut into 25mm wide strips. The heat-seal strength is determined by measuring the force required under linear tension per unit width of seal to peel the layers of the film apart at a constant speed of 4.23 mm/second.

(iii) Heat-seal strength to a standard APET/CPET tray is measured by the following procedure. The coated film was sealed, by means of the coating layer, to a standard APET/CPET tray (e.g. as manufactured by Faerchplast) using a Microseal PA 201 (Packaging Automation Ltd, England) tray sealer at a temperature of 180°C, and pressure of 80 psi for one second. Strips (25mm) of the sealed film and tray were cut out at 90° to the seal, and the load required to pull the seal apart was measured using an Instron Model 4301 operating at a crosshead speed of 0.2 $m.min^{-1}$. The procedure was repeated and a mean value of 5 results calculated.

(iv) Delamination Bond Strength is measured by the following procedure. Using a straight edge and a calibrated sample cutter (25mm+\-0.5mm) five strips of laminate of minimum length 100mm are cut. Peel between the laminated layers is initiated at one end of each sample and the laminates peeled apart over a distance of approximately 40mm in length. Each sample in turn is tested using an Instron model 4464 materials test machine, using pneumatic action grips with rubber jaw faces. Crosshead speed was $50mm.min^{-1}$. The samples are inserted into the Instron jaws with

one layer clamped in the fixed jaws and the other half in the moving jaws ensuring that an equal amount of each layer is held in each jaw to allow the laminate to be pulled apart evenly. The equipment records the mean peel strength of each sample between 10mm and 50mm and the bond strength of the laminate is quoted as an average of 5 samples in g\25mm.

(v) Solubility of the barrier layer is measured as the fraction of layer dissolved when the film is immersed in deionised water at 80°C for 2 minutes. Thus, in the case of a completely water insoluble barrier layer, the fraction of layer dissolved is 0. The procedure is as follows. A film sample (200 $cm^2$) is weighed and then immersed in 1-litre of deionized water at 80°C for 2 minutes, with stirring. The film sample is then dried at 120°C for 10 minutes in an oven. The weight of the treated film sample is then measured. The weight of the barrier layer fraction can then be calculated, since the weight of the coated film prior to treatment is known.

The film may also be inspected using a microscope (Microviewer Nikon V12B - magnification 50) to assess the covering of the slits/holes. In the case of a completely insoluble barrier layer, inspection of the film shows that the barrier layer remains intact, leaving the slits or perforations covered. In the case of a partially soluble barrier layer, the dissolved fraction will be greater than 0, and the perforations or slits may be uncovered or partially covered.

(vi) Self-venting is measured as the time (in seconds) required for the film to rupture and to begin self-venting. The film is heat-sealed at 160°C for 1 second under 5.5 bar to a PET tray (area: 16.5 cm x 12.5 cm, depth: 3.5 cm) containing 50 $cm^3$ of deionised water. The sealed tray is then put in a microwave oven at power 900W, set up for 10 minutes.

(vii) Tensile Elongation At Break according to test method ASTM D882. The barrier layer is first delaminated from the base film, which may be achieved by immersing the film in water at 70°C for 10 minutes. The separated layer is then dried in an oven under vacuum at 60°C for 24 hours. Using a straight edge and a calibrated sample cutter (25mm+\-0.5mm) five strips (100mm in length) of the film long are cut along machine direction. Each sample is tested using an Instron model 3111 materials test machine, using pneumatic action grips with rubber jaw faces. Temperature and relative humidity (23°C, 50% rh) are controlled. The crosshead speed (rate of separation) is 25 $mm.min^{-1}$. The strain rate is 50%. It is calculated by dividing the rate of separation by the initial distance between grips (sample length). The equipment records the elongation at break of each sample. The Elongation At Break ($\epsilon_B$ (%)) is defined as:

$$\epsilon_B (\%) = (\text{extension at break} / L_0) \times 100$$

where $L_0$ is the original length of the sample between grips.

The invention is illustrated by reference to Figure 1 which shows patterns (a) to (h) for the incisions in the substrate layer.

The invention is further illustrated by the following examples. It will be appreciated that the examples are for illustrative purposes only and are not intended to limit the invention as described above. Modification of detail may be made without departing from the scope of the invention.

## EXAMPLES

### Example 1

*(i) Manufacture of substrate layer*

A polymer composition comprising polyethylene terephthalate was co-extruded with a heat-sealable copolyester comprising terephthalic acid/isophthalic acid/ethylene glycol (82/18/100), cast onto a cooled rotating drum and stretched in the direction of extrusion to approximately 3 times its original dimensions. The film was passed into a stenter oven at a temperature of 100°C where the film was stretched in the sideways direction to approximately 3 times its original dimensions. The biaxially-stretched film was heat-set at a temperature of about 230°C by conventional means. The total thickness of the final film was 23 μm; the heat sealable layer was approximately 4 μm thick. Incisions were then effected in the substrate by straight blades. The incisions were linear and comprised 2 lines (each of about 2 cm long) per 200 $cm^2$.

*(ii) Manufacture of Composite Film*

The non-sealant side of the substrate was then extrusion-coated at 240°C with a coating comprising a copolyester thermoplastic elastomer (Arnitel ® EM400; DSM, Netherlands). The extruder output was 15kg/h and the speed of the web on which the resin was coated was 25m/min, to give a dry coating thickness of 12μm.

The elastomeric barrier layer was separated from the substrate and its Elongation At Break measured as 425% according to the test methods described herein.

The coated film is then heat-sealed to a PET tray containing 50ml of water at 160°C under a pressure of 5.5 bar for 1 second using a Sentinel Heat Sealer (Packaging Industries, USA). One incision was present in the film sealed to the tray. The self-venting properties were tested as described herein. The barrier layer over the slit ruptured after 25-35 seconds, allowing the film to self-vent thereafter.

## Claims

**1.** The use of a heat-sealable, composite film comprising a polymeric substrate layer having a first and second surface and disposed on a surface of the substrate layer a barrier layer, wherein

(i) the substrate layer has one or more venting means therein;
(ii) the thickness of the barrier layer is from about 0.05 to about 30 μm;
(iii) the barrier layer comprises a polyester thermoplastic elastomer; and
(iv) the Tensile Elongation At Break of the barrier layer measured according to ASTM D882 is at least 250%,

as packaging for an ovenable meal.

**2.** A use according to claim 1 wherein the Tensile Elongation At Break of the barrier layer measured according to ASTM D882 is in the range of 250% to 1000%.

**3.** A use according to claim 1 wherein the polyester thermoplastic elastomer is selected from poly(ether ester) copolymers.

**4.** A use according to claim 3 wherein the polyester thermoplastic elastomer is a poly(ether ester) copolymer comprising poly(alkylene oxide) units.

**5.** A use according to claim 4 wherein the poly(alkylene oxide) units are selected from poly(tetramethylene oxide) (PTMO), polyethylene oxide (PEO) or poly(propylene oxide) (PPO).

**6.** A use according to any preceding claim wherein said polyester thermoplastic elastomer comprises polyester units derived from one or more aromatic dicarboxylic acid(s).

**7.** A use according to claim 6 wherein said aromatic dicarboxylic acid is terephthalic acid, or where said polyester units are derived from a plurality of aromatic dicarboxylic acids then one of said aromatic dicarboxylic acids is terephthalic acid.

**8.** A use according to any preceding claim wherein said polyester thermoplastic elastomer comprises polyester units derived from one or more aliphatic diol(s).

**9.** A use according to claim 8 wherein said aliphatic diol is selected from ethylene glycol, 1,3-propanediol and 1,4-butanediol, or where said polyester units are derived from a plurality of aliphatic diols then one of said diols is selected from ethylene glycol, 1,3-propanediol and 1,4-butanediol.

**10.** A use according to any of claims 1 to 9 wherein the substrate layer is a polyolefin.

**11.** A use according to any of claims 1 to 9 wherein the substrate comprises polyester.

**12.** A use according to any of claims 1 to 9 wherein the substrate comprises polyethylene terephthalate.

**13.** A use according to any of claims 1 to 12 wherein the substrate layer is a heat-sealable layer.

**14.** A use according to any of claims 1 to 12 wherein there is disposed on the second surface of the substrate layer a heat-sealable layer.

**15.** A use according to claim 14 wherein the heat-sealable layer is a copolyester derived from ethylene glycol, terephthalic acid and isophthalic acid, preferably
wherein the molar ratio of the terephthalic acid component to the isophthalic acid component is in the range from 65:35 to 85:15, and more preferably is about 82:18.

**16.** A use according to claim 14 wherein the heat-sealable layer is a copolyester derived from terephthalic acid, ethylene glycol and 1,4-cyclohexanedimethanol, preferably wherein the molar ratio of 1,4-cyclohexanedimethanol to ethylene glycol is in the range from 30:70 to 35:65, and more preferably is about 33:67

**17.** A use according to claim 14 wherein the heat-sealable layer is a copolyester derived from an aromatic dicarboxylic acid, an aliphatic dicarboxylic acid and a stoichiometric amount of one or more glycols, wherein the concentration of said aromatic dicarboxylic acid in the copolyester is in the range from 50 to 55 mole % based on all the dicarboxylic acid components of the copolyester, and the concentration of said aliphatic dicarboxylic acid in the copolyester is in the range from 45 to 50 mole % basted on all the dicarboxylic acid components of the copolyester.

**18.** A use according to claim 17 wherein said aromatic dicarboxylic acid is terephthalic acid, wherein said aliphatic dicarboxylic acids are selected from sebacic acid, adipic acid and azelaic acid, and wherein the glycol component is ethylene or butylene glycol.

**19.** A use according to claim 14 wherein said heat-sealable layer comprises an ethylene vinyl acetate (EVA) having a vinyl acetate content in the range of 9% to 40%.

**20.** A use according to any preceding claim wherein said venting means comprises one or more incisions.

**21.** A use according to any preceding claim wherein the self-venting means comprises incisions which are from about 1 to about 40 mm in length.

**22.** A use according to claim 21 having from 1 to 100 incisions per 200 $cm^2$.

**23.** A use according to any preceding claim wherein the self-venting means comprises perforations having an average diameter from about 0.05 to about 1.5 mm.

**24.** A use according to claim 23 wherein the self-venting means comprises from about 1 to about 100,000 perforations per 200 $cm^2$.

**25.** A use according to claim 23 or 24 wherein a perforated substrate has a degree of perforation of from about 0.001 to about 50%.

**26.** A use according to claims 23, 24 or 25 wherein the thickness of the barrier layer is greater than 12 μm.

**27.** Use of a film as defined in any preceding claim as a self-venting film in the packaging of an ovenable meal.

**28.** Use of a film as defined in any preceding claim wherein said film is a lid in said packaging, said packaging further comprising a receptacle for the ovenable meal.

**29.** A process for producing a heat-sealable composite film comprising

(a) providing a polymeric substrate layer having a first and second surface and optionally a discrete heat-sealable layer disposed on the second surface of the substrate;
(b) providing one or more venting means in said substrate and if present said discrete heat-sealable layer; and
(c) providing a barrier layer comprising a polyester thermoplastic elastomer on a surface of the substrate,

wherein the thickness of the barrier layer is from about 0.05 to about 30 μm, and
wherein the Tensile Elongation At Break of the barrier layer measured according to ASTM D882 is at least 250%.

**30.** A process according to claim 29 wherein the barrier layer is coated onto the substrate.

**31.** A packaged food product wherein the packaging comprises a film as defined in any of claims 1 to 27.

**32.** A packaged food product according to claim 31 wherein the packaging comprises a receptacle containing the food product, and a lid formed from a polymeric film as defined in any of claims 1 to 27.

**33.** A packaged food product according to claim 31 wherein the packaging is a composite film as defined in any of claims 1 to 27 which is heat-sealed to itself.

**34.** A packaged food product according to any of claims 31 to 33 wherein the food product is an ovenable meal.

**35.** A heat-sealable, composite film comprising a polymeric substrate layer having a first and second surface and disposed on a surface of the substrate layer a barrier layer, wherein

(i) the substrate layer has one or more venting means therein;
(ii) the thickness of the barrier layer is from about 0.05 to about 30 μm;
(iii) the barrier layer comprises a polyester thermoplastic elastomer; and
(iv) the Tensile Elongation At Break of the barrier layer measured according to ASTM D882 is at least 250%.

**36.** A film according to claim 35 wherein said venting means comprises one or more incisions and said substrate and barrier layers are as defined in any of claims 2 to 27.

**37.** A film according to claim 36 wherein the self-venting means comprises perforations having an average diameter from about 0.05 to about 1.5 mm, wherein the thickness of the barrier layer is greater than 12 μm, and wherein said substrate and barrier layers are as defined in any of claims 2 to 19, 24 or 25.

**Patentansprüche**

**1.** Verwendung einer heißsiegelbaren Verbundfolie, welche eine Polymer-Substratschicht mit einer ersten und zweiten Oberfläche und einer Grenzschicht, angeordnet auf einer Oberfläche der Substratschicht, umfasst, wobei

(i) die Substratschicht eine oder mehrere Belüftungsstelle(n) darin aufweist;
(ii) die Dicke der Grenzschicht etwa von 0,05 bis etwa 30 μm ist;
(iii) die Grenzschicht ein thermoplastisches Polyester-Elastomer umfasst; und
(iv) die Zug-Bruch-Dehnung der Grenzschicht, gemessen gemäß ASTM D882, mindestens 250% ist,

als Verpackung für ein Fertiggericht.

**2.** Verwendung nach Anspruch 1, wobei die Zug-Bruch-Dehnung der Grenzschicht, gemessen gemäß ASTM D882, im Bereich von 250% bis 1000% liegt.

**3.** Verwendung nach Anspruch 1, wobei das thermoplastische Polyester-Elastomer aus Polyetherester-Copolymeren ausgewählt ist.

**4.** Verwendung nach Anspruch 3, wobei das thermoplastische Polyester-Elastomer ein Polyetherester-Copolymer ist, welches Polyalkylenoxid-Einheiten umfasst.

**5.** Verwendung nach Anspruch 4, wobei die Polyalkylenoxid-Einheiten aus Polytetramethylenoxid (PTMO), Polyethylenoxid (PEO) oder Polypropylenoxid (PPO) ausgewählt sind.

**6.** Verwendung nach einem der vorangehenden Ansprüche, wobei das thermoplastische Polyester-Elastomer Polyester-Einheiten umfasst, welche von einer oder mehreren aromatischen Dicarbonsäure(n) abgeleitet sind.

**7.** Verwendung nach Anspruch 6, wobei die aromatische Dicarbonsäure Terephthalsäure ist, oder die Polyester-Einheiten von einer Vielzahl aromatischer Dicarbonsäuren abgeleitet sind, wobei dann eine der aromatischen Dicarbonsäuren Terephthalsäure ist.

**8.** Verwendung nach einem der vorangehenden Ansprüche, wobei das thermoplastische Polyester-Elastomer Polyester-Einheiten umfasst, welche von einem oder mehreren aliphatischen Diol(en) abgeleitet sind.

**9.** Verwendung nach Anspruch 8, wobei das aliphatische Diol aus Ethylenglycol, 1,3-Propandiol und 1,4-Butandiol ausgewählt ist, oder die Polyester-Einheiten von einer Vielzahl aliphatischer Diolen abgeleitet sind, wobei dann eines der Diole aus Ethylenglycol, 1,3-Propandiol und 1,4-Butandiol ausgewählt ist.

**10.** Verwendung nach einem der Ansprüche 1 bis 9, wobei die Substratschicht ein Polyolefin ist.

**11.** Verwendung nach einem der Ansprüche 1 bis 9, wobei das Substrat Polyester umfasst.

**12.** Verwendung nach einem der Ansprüche 1 bis 9, wobei das Substrat Polyethylen-Terephthalat umfasst.

**13.** Verwendung nach einem der Ansprüche 1 bis 12, wobei die Substratschicht eine heißsiegelbare Schicht ist.

**14.** Verwendung nach einem der Ansprüche 1 bis 12, wobei auf der zweiten Oberfläche der Substratschicht eine heißsiegelbare Schicht angeordnet ist.

**15.** Verwendung nach Anspruch 14, wobei die heißsiegelbare Schicht ein Copolyester ist, der von Ethylenglycol, Terephthalsäure und Isophthalsäure abgeleitet ist, wobei das Molverhältnis von der Terephthalsäure-Komponente zu der lsophthalsäure-Komponente bevorzugt im Bereich von 65:35 bis 85:15 liegt, und mehr bevorzugt etwa 82:18 ist.

**16.** Verwendung nach Anspruch 14, wobei die heißsiegelbare Schicht ein Copolyester ist, der von Terephthalsäure, Ethylenglycol und 1,4-Cyclohexandimethanol abgeleitet ist, wobei das Molverhältnis von 1,4-Cyclohexandimethanol zu Ethylenglycol bevorzugt im Bereich von 30:70 bis 35:65 liegt, und mehr bevorzugt etwa 33:67 ist.

**17.** Verwendung nach Anspruch 14, wobei die heißsiegelbare Schicht ein Copolyester ist, der von einer aromatischen Dicarbonsäure, einer aliphatischen Dicarbonsäure und einem stöchiometrischen Anteil eines oder mehrerer Glycol (e) abgeleitet ist, wobei die Konzentration der aromatischen Dicarbonsäure im Copolyester im Bereich von 50 bis 55 Mol%, bezogen auf die gesamten Dicarbonsäure-Komponenten des Copolyesters, liegt, und die Konzentration der aliphatischen Dicarbonsäure im Copolyester im Bereich von 45 bis 50 Mol%, bezogen auf die gesamten Dicarbonsäure-Komponenten des Copolyesters, liegt.

**18.** Verwendung nach Anspruch 17, wobei die aromatische Dicarbonsäure Terephthalsäure ist, und die aliphatischen Dicarbonsäuren aus Sebacinsäure, Adipinsäure und Azelainsäure ausgewählt sind, und die Glycol-Komponente Ethylen- oder Butylenglycol ist.

**19.** Verwendung nach Anspruch 14, wobei die heißsiegelbare Schicht Ethylenvinylacetat (EVA) umfasst, welche einen Vinylacetat-Anteil im Bereich von 9% bis 40% aufweist.

**20.** Verwendung nach einem der vorangehenden Ansprüche, wobei die Belüftungsstellen eine oder mehrere Einschnitte umfassen.

**21.** Verwendung nach einem der vorangehenden Ansprüche, wobei die atmungsaktiven Stellen Einschnitte umfassen, die eine Länge von etwa 1 bis etwa 40 mm aufweisen.

**22.** Verwendung nach Anspruch 21 mit 1 bis 100 Einschnitten pro 200 $cm^2$.

**23.** Verwendung nach einem der vorangehenden Ansprüche, wobei die atmungsaktiven Stellen Perforationen, die einen mittleren Durchmesser von etwa 0,05 bis etwa 1,5 mm aufweisen, umfassen.

**24.** Verwendung nach Anspruch 23, wobei die atmungsaktiven Stellen von etwa 1 bis etwa 100000 Perforationen pro 200 $cm^2$ umfassen.

**25.** Verwendung nach Anspruch 23 oder 24, wobei ein perforiertes Substrat einen Perforierungsgrad von etwa 0,001 bis etwa 50% aufweist.

**26.** Verwendung nach Anspruch 23, 24 oder 25, wobei die Dicke der Grenzschicht größer als 12 $\mu$m ist.

**27.** Verwendung einer Folie definiert nach einem der vorangehenden Ansprüche als atmungsaktive Folie in der Verpackung eines Fertiggerichts.

**28.** Verwendung einer Folie, definiert nach einem der vorangehenden Ansprüche, wobei diese Folie eine Abdeckung der Verpackung ist und diese Verpackung weiter einen Behälter für das Fertiggericht umfasst.

**29.** Verfahren zur Herstellung einer heißsiegelbaren Verbundfolie, umfassend:

(a) Bereitstellen einer Polymer-Substratschicht, welche eine erste und zweite Oberfläche und optional eine diskrete heißsiegelbare Schicht, die auf der zweiten Oberfläche des Substrats angeordnet ist, aufweist;
(b) Bereitstellen einer oder mehrerer Belüftungsstelle(n) im Substrat und, falls vorhanden, in der heißsiegelbaren Schicht; und
(c) Bereitstellen einer Grenzschicht, die ein thermoplastisches Polyester-Elastomer auf der Oberfläche des Substrats umfasst,

wobei die Dicke der Grenzschicht von etwa 0,05 bis etwa 30 μm ist, und wobei die Zug-Bruch-Dehnung der Grenzschicht, gemessen gemäß ASTM D882, mindestens 250% beträgt.

**30.** Verfahren nach Anspruch 29, wobei die Grenzschicht auf ein Substrat imprägniert wird.

**31.** Verpacktes Essensprodukt, wobei die Verpackung eine Folie, definiert nach einem der Ansprüche 1 bis 27, umfasst.

**32.** Verpacktes Essensprodukt nach Anspruch 31, wobei die Verpackung ein Gefäß, das das Essensprodukt enthält, und eine Abdeckung, die aus einer gemäß einem der Ansprüche 1 bis 27 definierten Polymerfolie hergestellt ist, umfasst.

**33.** Verpacktes Essensprodukt nach Anspruch 31, wobei die Verpackung eine gemäß einem der Ansprüche 1 bis 27 definierte Verbundfolie ist, die mit sich selbst heißversiegelt ist.

**34.** Verpacktes Essensprodukt nach einem der Ansprüche 31 bis 33, wobei das Essensprodukt ein Fertiggericht ist.

**35.** Heißsiegelbare Verbundfolie, umfassend eine Polymer-Substratschicht mit einer ersten und einer zweiten Oberfläche und einer Grenzschicht, die auf einer Oberfläche der Substratschicht angeordnet ist, wobei

(i) in der Substratschicht eine oder mehrere Belüftungsstelle(n) ist bzw. sind;
(ii) die Dicke der Grenzschicht von etwa 0,05 bis etwa 30 μm ist;
(iii) die Grenzschicht ein thermoplastisches Polyester-Elastomer umfasst; und
(iv) die Zug-Bruch-Dehnung der Grenzschicht, gemessen gemäß ASTM D882, mindestens 250% beträgt.

**36.** Folie nach Anspruch 35, wobei die Belüftungsstelle eine oder mehrere Einschnitte umfasst und die Substrat- und Grenzschicht gemäß einem der Ansprüche 2 bis 27 definiert sind.

**37.** Folie nach Anspruch 36, wobei die atmungsaktive Stelle Perforationen umfasst, die einen mittleren Durchmesser von etwa 0,05 bis etwa 1,5 mm aufweisen, wobei die Dicke der Grenzschicht größer als 12 μm ist, und wobei die Substrat- und Grenzschicht gemäß einem der Ansprüche 2 bis 19, 24 oder 25 definert sind.

## Revendications

**1.** Utilisation d'un film composite thermosoudable comprenant une couche substrat polymère ayant une première et une seconde surfaces, et, disposée sur une surface de la couche de substrat, une couche barrière, dans laquelle

(i) la couche substrat comporte un ou plusieurs moyens d'aération ;
(ii) l'épaisseur de la couche barrière est comprise entre environ 0,05 et environ 30 μm ;
(iii) la couche barrière comprend un élastomère thermoplastique polyester ; et
(iv) la résistance à la rupture de la couche barrière, mesurée conformément à ASTM D882, est d'au moins 250 %,

en tant qu'emballage pour repas allant au four.

**2.** Utilisation selon la revendication 1, dans laquelle la résistance à la rupture de la couche barrière mesurée confor-

ment à ASTM D882 est comprise dans la plage de 250 % à 1000 %.

3. Utilisation selon la revendication 1, dans laquelle l'élastomère thermoplastique polyester est sélectionné parmi des copolymères de poly(étherester).

4. Utilisation selon la revendication 3, dans laquelle l'élastomère thermoplastique polyester est un copolymère de poly (étherester) comportant des motifs poly(oxyde d'alkylène).

5. Utilisation selon la revendication 4, dans laquelle les motifs poly(oxyde d'alkylène) sont sélectionnés parmi du poly (oxyde de tétraméthylène) (PTMO), de l'oxyde de polyéthylène (PEO) et du poly(oxyde de propylène) (PPO).

6. Utilisation selon l'une quelconque des revendications précédentes, dans laquelle ledit élastomère thermoplastique polyester comprend des motifs polyester dérivés d'un ou de plusieurs acides dicarboxyliques aromatiques.

7. Utilisation selon la revendication 6, dans laquelle ledit acide dicarboxylique aromatique est l'acide téréphtalique, ou dans laquelle lesdits motifs polyester sont dérivés de plusieurs acides dicarboxyliques aromatiques et l'un desdits acides dicarboxyliques aromatiques est l'acide téréphtalique.

8. Utilisation selon l'une quelconque des revendications précédentes, dans laquelle ledit élastomère thermoplastique polyester comprend des motifs polyester dérivés d'un ou de plusieurs diols aliphatiques.

9. Utilisation selon la revendication 8, dans laquelle ledit diol aliphatique est sélectionné parmi l'éthylèneglycol, le 1,3-propanediol et le 1,4-butanediol, ou dans laquelle lesdits motifs polyester sont dérivés de plusieurs diols aliphatiques et l'un desdits diols est sélectionné parmi l'éthylèneglycol, le 1,3-propanediol et le 1,4-butanediol.

10. Utilisation selon l'une quelconque des revendications 1 à 9, dans laquelle ladite couche substrat est une polyoléfine.

11. Utilisation selon l'une quelconque des revendications 1 à 9, dans laquelle le substrat comprend du polyester.

12. Utilisation selon l'une quelconque des revendications 1 à 9, dans laquelle le substrat comprend du téréphtalate de polyéthylène.

13. Utilisation selon l'une quelconque des revendications 1 à 12, dans laquelle la couche substrat est une couche thermosoudable.

14. Utilisation selon l'une quelconque des revendications 1 à 12, dans laquelle est disposée sur la seconde surface de la couche substrat une couche thermosoudable.

15. Utilisation selon la revendication 14, dans laquelle la couche thermosoudable est un copolyester dérivé de l'éthylèneglycol, de l'acide téréphtalique et de l'acide isophtalique, de préférence dans laquelle le rapport molaire entre le composant acide téréphtalique et le composant acide isophtalique est compris dans la plage allant de 65:35 à 85:15, et est de façon plus préférentielle d'environ 82:18.

16. Utilisation selon la revendication 14, dans laquelle la couche thermosoudable est un copolyester dérivé de l'acide téréphtalique, de l'éthylèneglycol et du 1,4-cyclohexanediméthanol, de préférence dans laquelle le rapport molaire entre le 1,4-cyclohexanediméthanol et l'éthylèneglycol est compris dans la plage allant de 30:70 à 35:65, et est de façon plus préférentielle d'environ 33:67.

17. Utilisation selon la revendication 14, dans laquelle la couche thermosoudable est un copolyester dérivé d'un acide dicarboxylique aromatique, d'un acide dicarboxylique aliphatique et d'une quantité stoechiométrique d'un ou de plusieurs glycols, dans laquelle la concentration dudit acide dicarboxylique aromatique dans le copolyester est comprise dans la plage allant de 50 à 55 % en mole, sur la base de tous les composants acide dicarboxylique du copolyester, et dans laquelle la concentration dudit acide dicarboxylique aliphatique dans le copolyester est comprise dans la plage allant de 45 à 50 % en mole, sur la base de tous les composants acide dicarboxylique du copolyester.

18. Utilisation selon la revendication 17, dans laquelle ledit acide dicarboxylique aromatique est l'acide téréphtalique,

dans laquelle lesdits acides dicarboxyliques aliphatiques sont sélectionnés parmi l'acide sébacique, l'acide adipique et l'acide azélaïque, et dans laquelle le composant glycol est l'éthylène ou le butylèneglycol.

**19.** Utilisation selon la revendication 14, dans laquelle ladite couche thermosoudable comprend un éthylène-vinyl-acétate (EVA) ayant une teneur en acétate de vinyle dans la plage de 9 % à 40 %.

**20.** Utilisation selon l'une quelconque des revendications précédentes, dans laquelle ledit moyen d'aération comprend une ou plusieurs incisions.

**21.** Utilisation selon l'une quelconque des revendications précédentes, dans laquelle le moyen d'auto-aération comprend des incisions d'une longueur comprise entre environ 1 et environ 40 mm.

**22.** Utilisation selon la revendication 21, comportant 1 à 100 incisions pour 200 $cm^2$.

**23.** Utilisation selon l'une quelconque des revendications précédentes, dans laquelle le moyen d'auto-aération comprend des perforations ayant un diamètre moyen compris entre environ 0,05 et environ 1,5 mm.

**24.** Utilisation selon la revendication 23, dans laquelle le moyen d'auto-aération comprend environ 1 à environ 100 000 perforations pour 200 $cm^2$.

**25.** Utilisation selon la revendication 23 ou 24, dans laquelle un substrat perforé a un degré de perforation compris entre environ 0,001 et environ 50 %.

**26.** Utilisation selon les revendications 23, 24 ou 25, dans laquelle l'épaisseur de la couche barrière est supérieure à 12 $\mu$m.

**27.** Utilisation d'un film tel que défini dans l'une quelconque des revendications précédentes en tant que film à auto-aération dans l'emballage d'un repas allant au four.

**28.** Utilisation d'un film tel que défini dans l'une quelconque des revendications précédentes, dans laquelle ledit film est un couvercle dans ledit emballage, ledit emballage comprenant en outre un récipient pour le repas allant au four.

**29.** Procédé de fabrication d'un film composite thermosoudable, comprenant les étapes consistant à :

(a) fournir une couche substrat polymère présentant une première et une seconde surfaces et en option une couche thermosoudable discrète disposée sur la seconde surface du substrat ;
(b) fournir un ou plusieurs moyens d'aération dans ledit substrat et, si elle est présente, dans ladite couche thermosoudable discrète ; et
(c) fournir une couche barrière comprenant un élastomère thermoplastique polyester sur une surface du substrat,

dans lequel l'épaisseur de la couche barrière est comprise entre environ 0,05 et environ 30 $\mu$m, et dans lequel la résistance à la rupture de la couche barrière, telle que mesurée selon ASTM D882, est au moins égale à 250 %.

**30.** Procédé selon la revendication 29, dans lequel la couche barrière est déposée sur le substrat.

**31.** Produit alimentaire emballé dans lequel l'emballage comprend un film tel que défini dans l'une quelconque des revendications 1 à 27.

**32.** Produit alimentaire emballé selon la revendication 31, dans lequel l'emballage comprend un récipient contenant le produit alimentaire, et un couvercle formé à partir d'un film polymère tel que défini dans l'une quelconque des revendications 1 à 27.

**33.** Produit alimentaire emballé selon la revendication 31, dans lequel l'emballage est un film composite tel que défini dans l'une quelconque des revendications 1 à 27 qui est thermosoudé à lui-même.

**34.** Produit alimentaire emballé selon l'une quelconque des revendications 31 à 33, dans lequel le produit alimentaire est un repas allant au four.

**35.** Film composite thermosoudable comprenant une couche substrat polymère ayant une première et une seconde surfaces, et disposée sur une surface de la couche substrat une couche barrière, dans lequel

(i) la couche substrat possède un ou plusieurs moyens d'aération ;
(ii) l'épaisseur de la couche barrière est comprise entre environ 0,05 et environ 30 $\mu$m ;
(iii) la couche barrière comprend un élastomère thermoplastique polyester ; et
(iv) la résistance à la rupture de la couche barrière, mesurée conformément à ASTM D882, est au moins égale à 250 %.

**36.** Film selon la revendication 35, dans lequel ledit moyen d'aération comprend une ou plusieurs incisions et lesdites couches substrat et barrière sont telles que définies dans l'une quelconque des revendications 2 à 27.

**37.** Film selon la revendication 36, dans lequel le moyen d'auto-aération comprend des perforations ayant un diamètre moyen compris entre environ 0,05 et environ 1,5 mm, dans lequel l'épaisseur de la couche barrière est supérieure à 12 $\mu$m et dans lequel lesdites couches substrat et barrière sont telles que définies dans l'une quelconque des revendications 2 à 19, 24 ou 25.

FIG. 1(a)

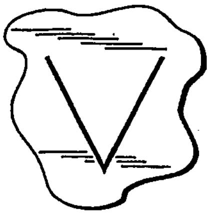

FIG. 1(b)

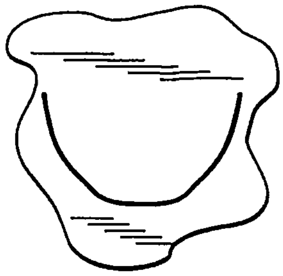

FIG. 1(c)

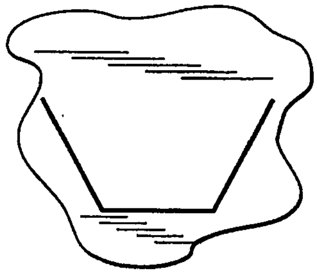

FIG. 1(d)

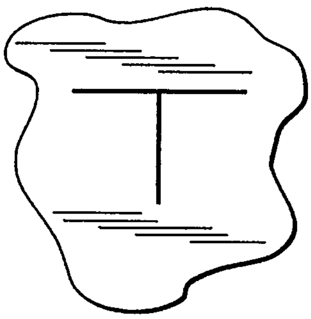

FIG. 1(e)

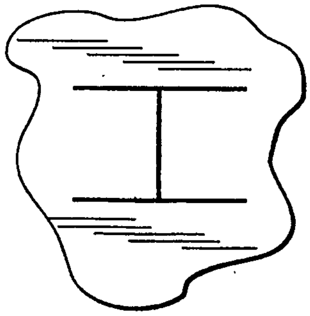

FIG. 1(f)

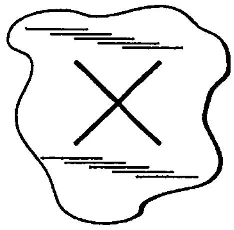

FIG. 1(g)

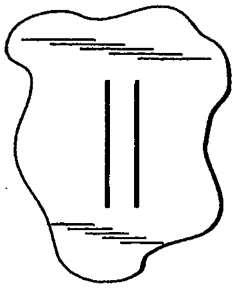

FIG. 1(h)

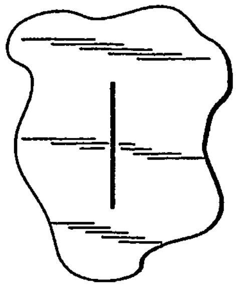

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2280342 A
- EP 0563442 A
- GB 2250408 A
- GB 2046060 A
- WO 0192000 A
- GB 2355956 A
- EP 0358461 A
- EP 0178218 A
- US 20020187694 A
- JP 6219465 A
- JP 6165636 A
- JP 54117582 A
- WO 0226493 A
- WO 03026892 A
- WO 03061957 A
- GB 838708 A
- GB 2024715 A
- GB 1077813 A
- US 4333968 A
- WO 0259186 A
- US 4725481 A


### Non-patent literature cited in the description


- Synthesis and Characteristics of Polyester-Based Thermoplastic Elastomers: Chemical Aspects. **Z. Roslaniec ; D. Pietkiewicz.** Handbook of Thermoplastic Polyesters. Wiley-VCH, vol. I, 581-658
- Encyclopedia of Polymer Science and Technology. 1985, vol. 12, 76-177
- **K.A. Mainstone.** Modern Plastics Encyclopedia. McGraw-Hill, 1983, vol. 60, 195-198
- **Franz Durst ; Hans-Günte Wagner.** Liquid Film Coating. Chapman and Hall, 1997